# EUROPEAN PATENT APPLICATION

(11) **EP 4 546 151 A1**
(43) Date of publication of application: **30.04.2025**
(21) Application number: 24170179.6
(22) Date of filing: 15.04.2024
(51) Int. Cl.: G06F 15/78, H04L 45/17, H04L 49/25

(54) **COMPUTING SYSTEM AND DATA TRANSPORT SYSTEM**

(30) Priority: 25.10.2023 US 202318383481
(71) Applicant: MediaTek Inc., Hsin-Chu 300 (TW)
(72) Inventor: HSIEH, Tsai-Chun, 30078 Hsinchu City (TW)
(74) Representative: Hoefer & Partner Patentanwälte mbB

(57) **Abstract**

A computing system comprising: routers (RO), configured to transport data to nodes (NO); transport stations (TR), configured to transport the data to the nodes (NO) through the routers (RO); first paths, provided between adjacent ones of the routers (RO); second paths, provided between adjacent ones of the transport stations (TR). The computing system operates in a first mode, which transmits the data from a first target device to a second target device via the first paths and the second paths.

## Description

### Background

A conventional NoC (Network on Chip) system may comprise a plurality of routers, such that the NoC system can receive input data and transport the input data to a node via the routers. However, transport delay may be caused when the data is input to the router or when the data is output by the router. Accordingly, if the transport of data goes through many routers, a large data transport delay may be caused.

### Summary

One objective of the present application is to provide a computing system which can reduce transport delay. Another objective of the present application is to provide a data transport system which can reduce transport delay.

A data transport system according to the invention is defined in claim 1. A computing system according to the invention is defined in claim 2. The further dependent claims define preferred embodiments thereof.

One embodiment of the present application discloses a computing system, which comprises: a plurality of routers, configured to transport data to nodes; a plurality of transport stations, configured to transport the data to the nodes or to the routers; a plurality of first paths, provided between adjacent ones of the routers; a plurality of second paths, provided between adjacent ones of the transport stations. The computing system operates in a first mode, which transmits the data from a first target device to a second target device via the first paths and the second paths during a first time interval. The first target device is one of the routers or one of the nodes, and the second target device is one of the routers or one of the nodes.

Another embodiment of the present application discloses a data transport system, comprising: a plurality of first transport devices, configured to transport data to destination devices; a plurality of second transport devices, configured to transport the data to the destination devices or to the first transport devices; a plurality of first paths, provided between adjacent ones of the first transport devices; a plurality of second paths, provided between adjacent ones of the second transport devices. The data transport system selectively operates in a first mode, which transmits the data from a first target device to a second target device via the first paths and the second paths during a second time interval. The first target device is one of the first transport devices or one of the destination devices, and the second target device is one of the first transport devices or one of the destination devices.

In view of above-mentioned embodiments, the transport delay can be reduced, since the data can be transported by a shortcut formed by the transport stations rather than limited to be transported by a path only formed by routers.

These and other objectives of the present application will no doubt become obvious to those of ordinary skill in the art after reading the following detailed description of the preferred embodiment that is illustrated in the various figures and drawings.

### Brief Description of the Drawings

FIG.1 is a schematic diagram illustrating a portion of a computing system according to one embodiment of the present application.

FIG.2 is a schematic diagram illustrating a more complete structure of the computing system illustrated in FIG.1.

FIG.3 is a schematic diagram illustrating the paths of the transport station or the router, which correspond to different directions, according to one embodiment of the present application.

FIG.4, FIG.5, FIG.6 and FIG.7 are schematic diagrams illustrating details of the transport station or the router, according to different embodiments of the present application.

FIG.8 is a block diagram illustrating a super computer system, according to one embodiment of the present application.

### Detailed Description

In the following descriptions, the term "first", "second", "third" in following descriptions are only for the purpose of distinguishing different elements, and do not mean the sequence of the elements. For example, a first device and a second device only mean these devices can have the same structure but are different devices. Besides, the term "data" in following embodiments can mean any signal or any information which can be used for electronic devices.

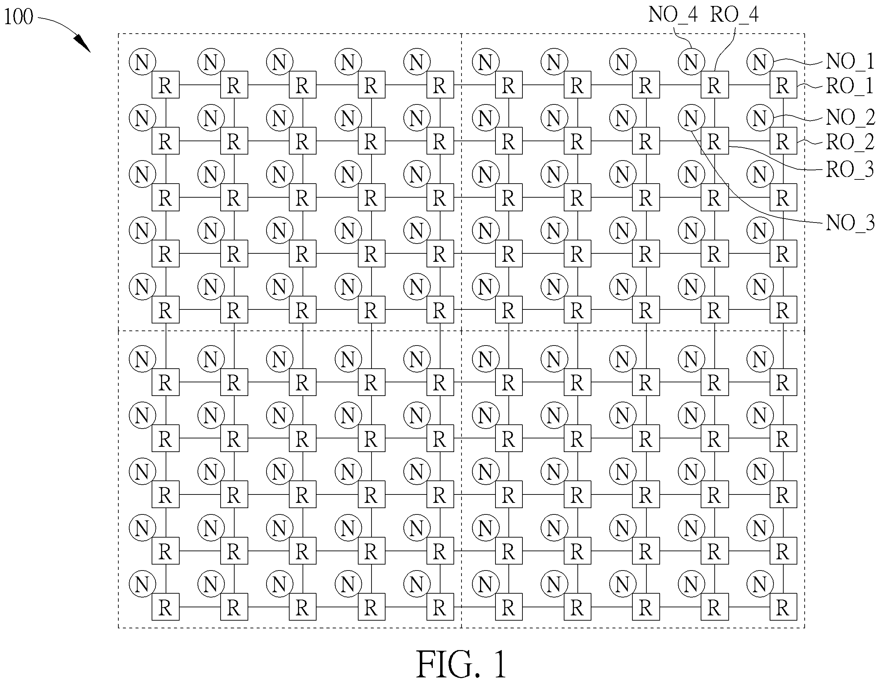

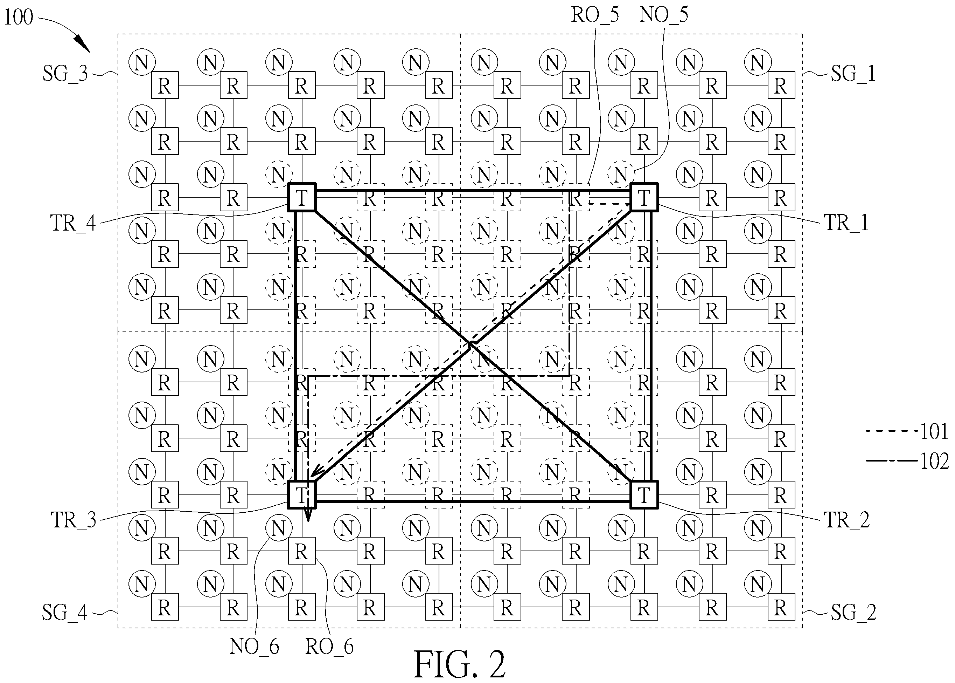

Further, in following embodiments, an NoC system is used as an example for explaining. However, the concepts disclosed in following embodiments can be applied to any other computing system. FIG.1 is a schematic diagram illustrating a portion of a computing system according to one embodiment of the present application.FIG.2 is a schematic diagram illustrating a more complete structure of the computing system illustrated in FIG.1. Please refer to FIG.1 while referring to FIG.2, to understand the concepts of the present application for more clarity.

As shown in FIG.1, the computing system 100 comprises a plurality of routers (four routers RO_1, RO_2, RO_3 and RO_4 are symbolized for explaining) . The routers are configured to transport data to nodes (four nodes NO_1, NO_2, NO_3 and NO_4 are symbolized for explaining). The node can be any electronic device which can receive data, such as a CPU or a GPU.

Please note, in the embodiment of FIG.1, each router corresponds to one node. For example, the router RO_1 is configured to output data to the node NO_1 and the router RO_2 is configured to output data to the node NO_2. However, the router may correspond more than one node. Also, the router may only transport data but does not output data to any node. Also, in the embodiment of FIG.1, first paths are provided between adjacent routers. For example, a first path is provided between the router RO_1 and the router RO_2 and a first path is provided between the router RO_1 and the router RO_3. Please note the adjacent routers mean that no other router is needed while transporting data between two adjacent routers. For example, routers RO_1 and RO_2 are adjacent routers and routers RO_3 and RO_4 are adjacent routers, but routers RO_1 and RO_3 are not adjacent routers. In one embodiment, the transport times of all first paths are the same. In another embodiment, the transport times of different first paths are different. For example, transport time of the first path between routers RO_1 and RO_2 and transport time of the first path between routers RO_3 and RO_4 are different.

FIG.2 is a schematic diagram illustrating a more complete structure of the computing system illustrated in FIG.1. Please note, for the convenience of explaining, some symbols in FIG. 1 are not shown in FIG.2 and some components of FIG.1 are shown by dotted lines in FIG.2. Besides the components illustrated in FIG.1, the embodiment in FIG.2 further comprises a plurality of transport stations. Four transport stations TR_1 to TR_4 are used as examples for explaining. The transport stations TR_1 to TR_4 are configured to transport the data to the nodes through the routers. For example, the transport station TR_1 may transport the data to the node NO_5 or to the router RO_5.

Second paths are provided between adjacent transport stations. For example, a second path is provided between the transport station TR_1 and the transport station TR_2, and a second path is provided between transport station TR_2 and the transport station TR_3. Please note the adjacent transport stations mean that no other transport station is needed while transporting data between two adjacent transport stations. In the embodiment of FIG.2, the transport stations TR_1 to TR_4 are adjacent transport stations for each other. In one embodiment, the transport times of all second paths are the same. In another embodiment, the transport times of different second paths are different. For example, the transport time of the second path between transport stations TR_1 and TR_2 and the transport time of the second path between transport stations TR_3 and TR_4 are different.

The computing system 100 may adaptively select the first paths(second mode), the second paths(third mode) and the combination (first mode) with a shorter time interval to transmit data from a first target device to a second target device according to the locations where the first target device and the second target device situated in. The first device and the second device may be one of the nodes or routers.

Preferably, the computing system operates in a first mode, which transmits the data from a first target device to a second target device via the first paths and the second paths during a first time interval. A second path may replace a plurality of first paths. For example, a second path between the transport stations TR_1 and TR_2 may replace a plurality of first paths of the routers between the transport stations TR_1 and TR_2. Accordingly, less routers are needed while using the second paths to replace the first paths.

Also, the computing system may operate in a second mode, which transmits the data from the first target device to the second target device via the first paths without the second paths during a second time interval which is shorter than the first time interval.

The first target device and the second target device may be a router or a node. For example, in FIG.2, the computing system 100 may transmit the data from the router RO_5 to the router RO_6 via a first route 101 with the first paths and the second paths in a first time interval in a first mode. For the first route 101, the data have to been delivered from the router RO_5 to the router RO_6 via two routers and two transport stations TR_2 and TR_3.

Alternatively, the computing system 100 may transmit the data from the router RO_5 to the router RO_6 via a second route 102 with the first paths but without the second paths during a second time interval in a second mode. For the second route 102, the data have to been delivered from the router RO_5 to the router RO_6 via eight routers.

In the present embodiment, the first time interval of the first route 101 is shorter than the second time interval of the second route 102 since the midway stations (routers or transportation station) in the first route 101 is less than that of the second route 102. Therefore, the computing system would select the first route 101 to transmit data from the router RO_5 to the router RO_6.

However, for other embodiments, if the midway stations in the first route is more than that of the second route, the first time interval of the first route is larger than the second time interval of the second route. In such case, the second route is selected to transmit data.

Preferably, the computing system 100 may further selectively operate in a third mode, which transmits the data from the first target device to the second target device via the second paths without the first paths. For example, since the node NO_5 and the node NO_6 are adjacent to the transport station TR_1 and the transport station TR_3 respectively, the computing system 100 transmits the data from a node NO_5 to a node NO_6 only via a second path between the transport station TR_1 and the transport station TR_3 but not via any first path.

Preferably, the routers are classified into a plurality of system groups SG_1...SG_4 according to locations of the routers. The location may mean physical locations or access addresses of the routers. It will be appreciated that the number of the system groups can be any other number rather than limited to 4. Preferably, the computing system 100 operates in one of the first mode, the second mode and the third mode according to the system group which the first target device and the second target device are located in. For example, if the first target device and the second target device are both in the system group SG_1, the computing system 100 operates in the second mode since no suitable second path can be used. For another example, if the first target device is in the system group SG_1 and the second target device is in the system group SG_4, the data is transmitted to the transport station TR_1 first and then transmitted to the transport station TR_3 via the second path. After that, the data is transmitted to the second target device from the transport station TR_3.

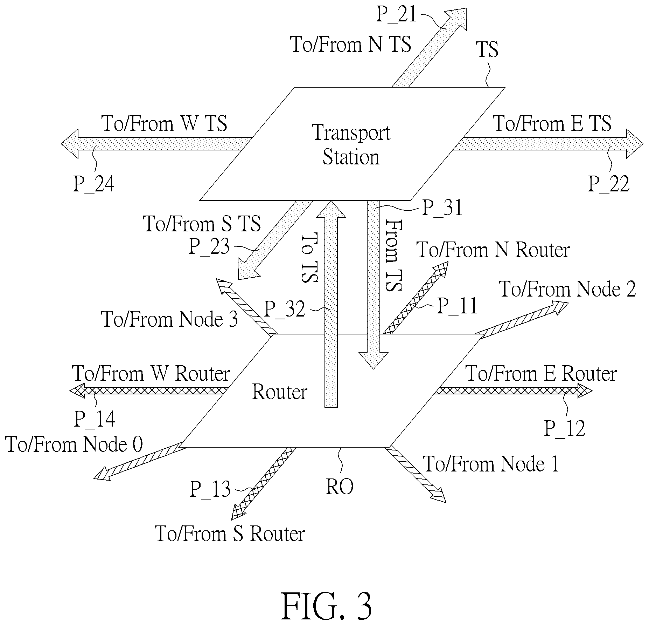

FIG.3 is a schematic diagram illustrating the paths of the transport station or the router, which correspond to different directions, according to different embodiments of the present application. Please note, the structure of paths of the transport station TS and the router RO is not limited to the structure shown in FIG.3. In the embodiment of FIG.3, the transport station TS and the router RO are illustrated as a 3D diagram. However, it is not limited that the transport station TS and the router RO are provided in different planes. Preferably, the transport station TS and the router RO can be provided in the same plane.

As shown in FIG.3, the first paths P_12, P_13, P_14 and P_11 may respectively have different directions: East, South, West and North. Please note, the directions "East, South, West and North" mentioned here are only used for representing different directions but do not mean geographical directions. Accordingly, the first paths P_12, P_13, P_14 and P_11 are respectively to/from routers in the East, South, West and North (herein after, E router, S router, W router and N router) . Following the same rule, the second paths P_22, P_23, P_24 and P_21 are respectively to/from transport stations in the East, South, West and North (herein after, E TS, S TS, W TS and N TS). Also, paths P_31, P_32 are provided between the transport station TS and the router RO, such that data can be transmitted between the transport station TS and the router RO. Additionally, the router RO may further comprise paths to and from the nodes 0-3.

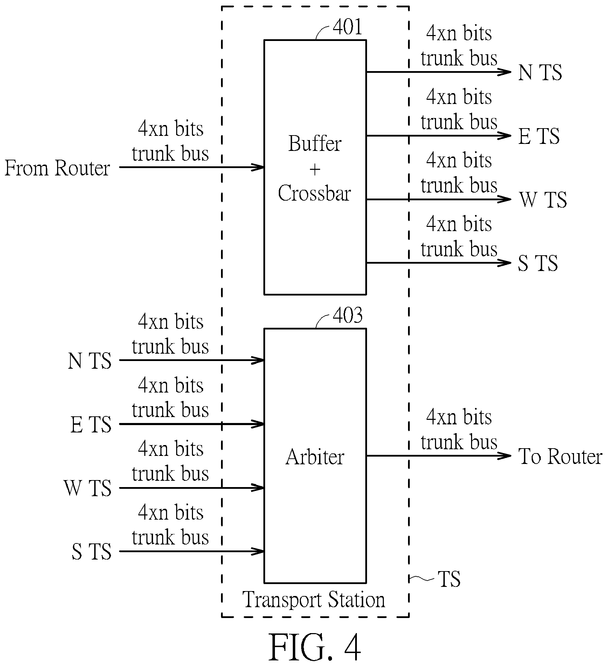

FIG.4, FIG.5, FIG.6 and FIG.7 are schematic diagrams illustrating details of the transport station or the router, according to different embodiments of the present application. In the embodiment of FIG.4, the transport station TS comprises a device 401 which comprises at least one cross bar switch and at least one buffer. The crossbar switch, which is provided between the transport station TS and at least one router, is configured to change a switch state thereof to transport the data from the router to the transport stations N TS, E TS, W TS or the S TS. The buffer, which is provided between the transport station TS and the router, is configured to buffer the data from the router to the transport station N TS, E TS, W TS or the S TS.

The arbiter 403, which is provided between the transport station N TS, E TS, W TS or the S TS and the router, is configured to allocate the data from the transport station N TS, E TS, W TS or the S TS to the router. For example, the arbiter 403 is a TDM (Time-Division Multiplexing) arbiter. Also, in the embodiment of FIG.4, the second paths between transport stations TS and N TS, E TS, W TS or the S TS are 4n bits trunk buses and the paths between the transport station TS and a router is a 4n bits trunk bus as well.

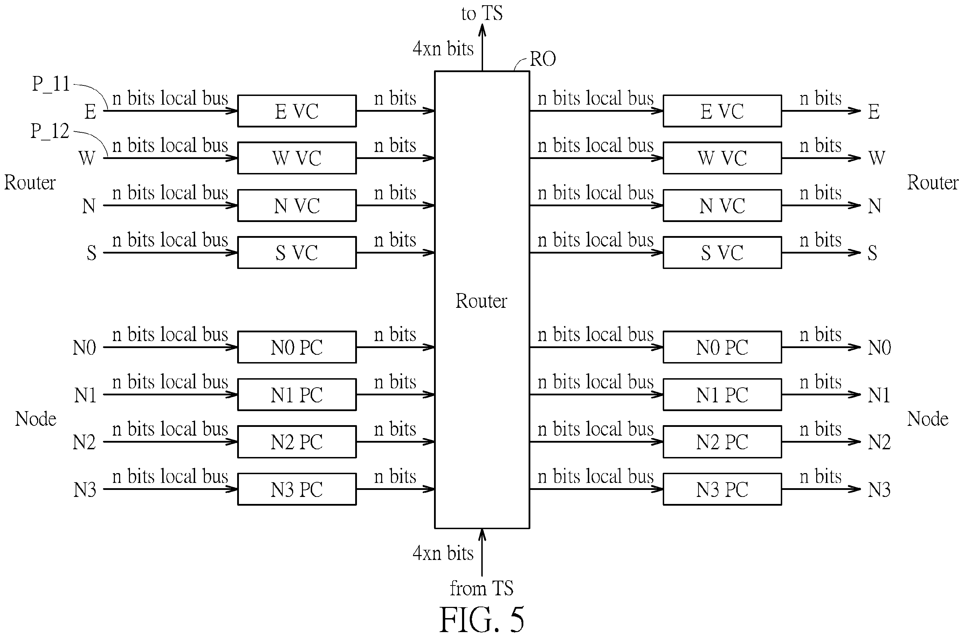

Different types of paths may have different structures or bandwidths. In the embodiment of FIG.5, the computing system transmits the data from one of the nodes to another one of the nodes via at least one physical channel (PC). For example, the data from a node N0 to a node N1 is transmitted to the router RO via a physical channel N0 PC and then transmitted from the router RO to the node N1 via a physical channel N1 PC. The physical channel means real and physical channel, such as a transmission line or a bus.

Further, in the embodiment of FIG.5, the computing system transmits the data from one of the routers to another one of the routers via at least one virtual channel. For example, the data from an E router to a W router is transmitted to the router RO via a virtual channel E VC and then transmitted from the router RO to the W router via a virtual channel W VC. A virtual channel (VC) is a communications track between two devices giving the bandwidth needed for a virtual connection. Preferably, the bandwidth of the virtual channel is smaller than which of the physical channel, thus more virtual channels may be combined to form a single virtual channel.

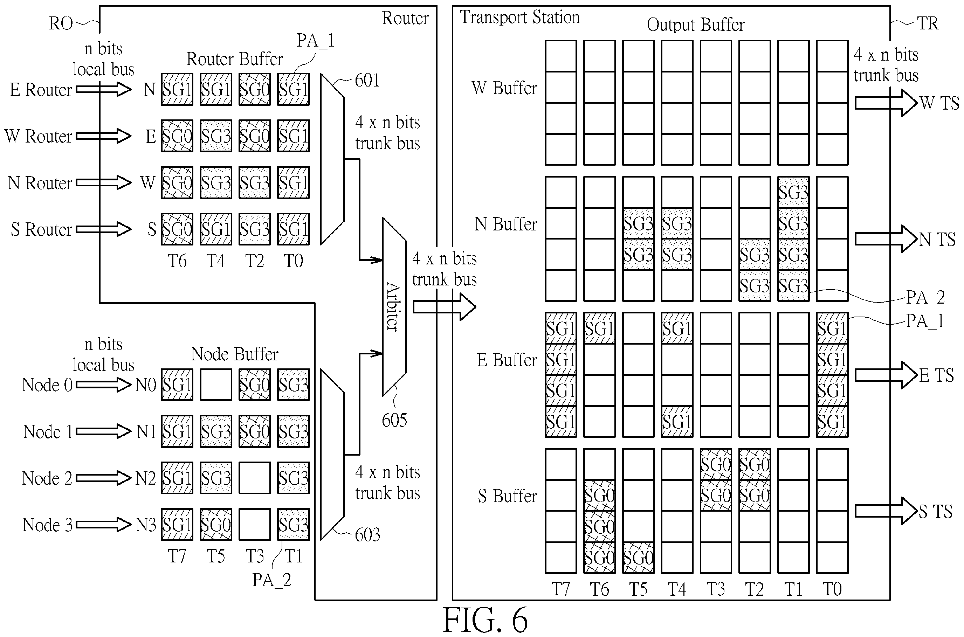

FIG.6 is a schematic diagram illustrating how the data is transported by the computing system, according to one embodiment of the present application. In such embodiment, the transport station TS comprises a plurality of output buffers, such as W buffer, N buffer, E buffer and S buffer. Also, the router RO comprises multiplexers 601, 603, an arbiter 605 and a router buffer. The data is transmitted in a packet format, such as the packets PA_1, PA_2 in FIG.6.

The symbols in the packets represent destinations which the packet are supposed to be transported to. For example, the packet PA_1 is supposed to be transported to the system group SG_1 in FIG.2 and the packet PA_2 is supposed to be transported to the system group SG_3 in FIG.2. In the embodiment of FIG.6, the arbiter 605 is a TDM arbiter, thus the router buffer stores the packets from the E, W, N, S routers, and then the multiplexer 601 selectively outputs these packets at times T0, T2, T4 and T6. A node buffer is also comprised in the embodiment of FIG.6. In such case, the node buffer stores the packets from the nodes 0, 1, 2, 3 and then the multiplexer 603 selectively outputs these packets at times T1, T3, T5 and T7. In the embodiment of FIG.6, the sequence of times T1-T7 is T1, T2, T3, T4, T5, T6, T7.

The data output by the arbiter 605 is stored to the output buffers corresponding to the destinations of the data. For example, the destination of the packet PA_1 is the system group SG1, and should be transported by the transport station E TS, thus is stored to the output buffer E buffer corresponding to the transport station E TS at the time T0. For another example, the destination of the packet PA_2 is the system group SG3, and should be transported by the transport station N TS, thus is stored to the output buffer N buffer corresponding to the transport station N TS at the time T1. The paths in FIG.6 may have different bandwidths. For example, the paths between routers (e.g., the first paths) may be n bits local buses, and the paths of the multiplexers 601, 603 and the arbiter 605 are 4n bits trunk buses. Further, the paths between transport stations(e.g., the second paths) may be 4n bits trunk buses. Accordingly, in the embodiment of FIG.6, bandwidths of the second paths between adjacent transport stations are larger than bandwidths of the first paths between adjacent routers.

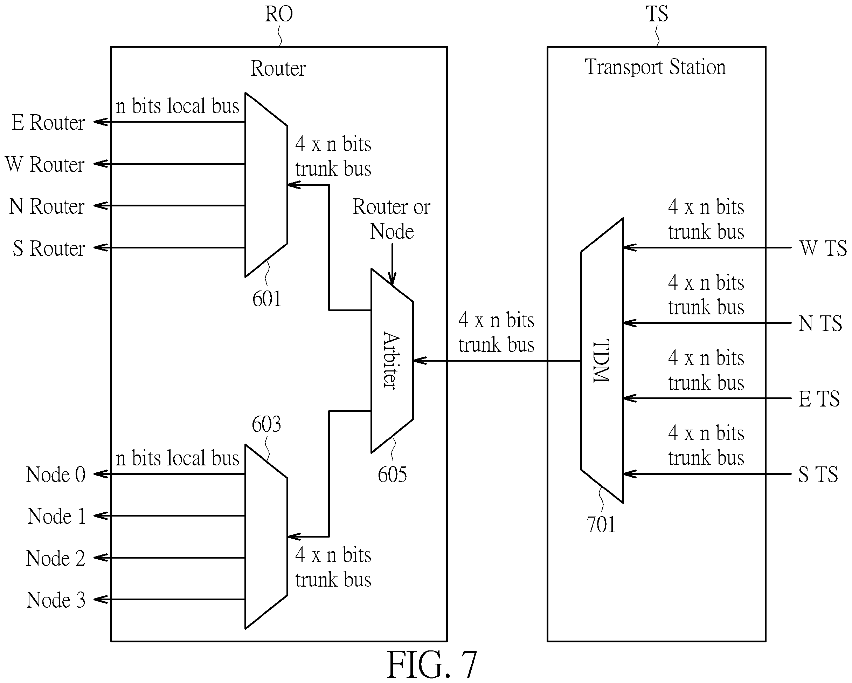

In the embodiment of FIG.6, the data is from routers or nodes to the transport stations. In the embodiment of FIG.7, the transport direction of data is opposite to which of the FIG.6. That is, the data is from transport stations to the routers or nodes. In the embodiment of FIG.7, the router RO also comprises multiplexers 601, 603 and the arbiter 605, and the transport station TS comprises a TDM arbiter 701. The TDM arbiter 701 selectively outputs data from the transport stations W TS, N TS, E TS, and the S TS to the arbiter 605. The arbiter 605 selectively outputs data to the multiplexer 601 or 603. The multiplexer 601 selectively outputs data to the E router, the W router, the N router or the S router. The multiplexer 603 selectively outputs data to the node 0, node 1, node 2, or the node 3.

In the above-mentioned embodiments, the computing system is an NoC system. Accordingly, the routers, the transport stations, the first paths and the second paths are provided in a single chip. However, the computing system disclosed in the present application can be applied to a multi-chip system, which can be a super computer system.

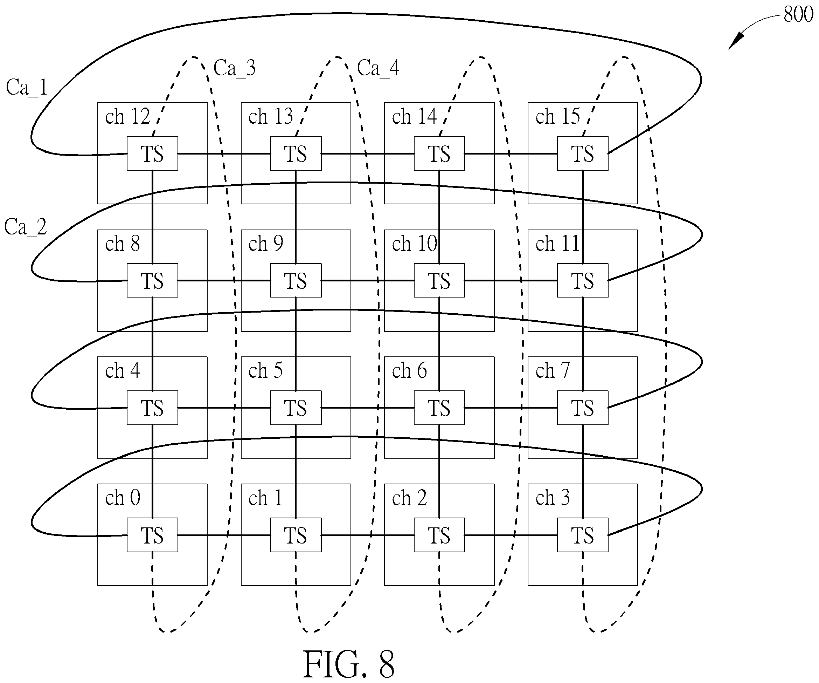

FIG.8 is a block diagram illustrating a super computer system 800, according to one embodiment of the present application. As shown in FIG.8, a plurality of transport stations TS are disposed in different chips ch1-ch15. In one embodiment, the chips ch1-ch15 are provided in at least two computers. The transport stations TS may be connected by different cables, such as the cables Ca_1...Ca_4 in FIG.8. The operations of FIG.8 are similar with which of above-mentioned embodiments. The data may be transmitted between different transport stations, and then transported to the routers in different chips or transported to nodes which are connected to the transport stations TS.

In view of above-mentioned embodiments, the computing system provided by the present application may be summarized as a computing system comprising a plurality of routers, a plurality of transport stations, a plurality of first paths and a plurality of second paths. The routers are configured to transport data to nodes. The transport stations are configured to transport the data to the nodes or to the routers. First paths are provided between adjacent ones of the routers. Second paths are provided between adjacent ones of the transport stations. The computing system selectively operates in a first mode, which transmits the data from a first target device to a second target device via the first paths and the second paths during a first time interval. The first target device is one of the routers or one of the nodes, and the second target device is one of the routers or one of the nodes.

In above-mentioned embodiments, a computing system, which comprises routers for transporting data to nodes, is applied to a single chip system (the NoC system) or a multi-chip system. However, the concept disclosed by the present invention may be implemented to any data transport system rather than a computing system comprising routers for transporting data to nodes. In such case, the router is replaced by a "first transport device", and the transport station is replaced by a "second transport device". Also, the node is replaced by a "destination device".

In view of above-mentioned embodiments, the transport delay can be reduced, since the data can be transported by a shortcut formed by the transport stations rather than limited to be transported by a path only formed by routers.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A data transport system, comprising:
a plurality of first transport devices (RO), configured to transport data to destination devices (NO);
a plurality of second transport devices (TR; TS), configured to transport the data to the destination devices (NO) through the first transport devices (RO);
a plurality of first paths, provided between adjacent ones of the first transport devices (RO);
a plurality of second paths, provided between adjacent ones of the second transport devices (TR; TS);
wherein the data transport system operates in a first mode, which transmits the data from a first target device to a second target device via the first paths and the second paths during a first time interval;
wherein the first target device is one of the first transport devices (RO) or one of the destination devices (NO), and the second target device is one of the first transport devices (RO) or one of the destination devices (NO).

2. The data transport system of claim 1, wherein the data transport system is a computing system, the first transport device (RO) is a router, the second transport device (TR; TS) is a transport station, and the destination device (NO) is a node.

3. The data transport system of claim 1 or 2, wherein the data transport system further operates in a second mode, which transmits the data from the first target device to the second target device via the first paths without the second paths during a second time interval; and the first time interval is larger than the second time interval.

4. The data transport system of any one of claims 1 to 3, wherein the data transport system further selectively operates in a third mode, which transmits the data from the first target device to the second target device via the second paths without the first paths.

5. The data transport system of any one of claims 1 to 4, wherein bandwidths of the second paths are larger than bandwidths of the first paths.

6. The data transport system of any one of claims 1 to 5, wherein the first transport devices (RO) are classified into a plurality of system groups (SG) according to locations of the first transport devices (RO) or the destination devices (NO), wherein the data transport system operates in the first mode or in the second mode according to the system group which the first target device and the second target device are located in.

7. The data transport system of any one of claims 1 to 6, further comprising:
at least one crossbar switch, provided between the second transport devices (TR; TS) and the first transport devices (RO), configured to transport the data from the first transport devices (RO) to the second transport devices (TR; TS); and
at least one buffer, provided between the second transport devices (TR; TS) and the first transport devices (RO), configured to buffer the data from the first transport devices (RO) to the second transport devices (TR; TS).

8. The data transport system of any one of claims 1 to 7, further comprising:
at least one arbiter, provided between the second transport devices (TR; TS) and the first transport devices (RO), configured to allocate the data from the second transport devices (TR; TS) to the first transport devices (RO).

9. The data transport system of any one of claims 1 to 8, wherein the data transport system transmits the data from one of the destination devices (NO) to another one of the destination devices (NO) via at least one physical channel, and transmits the data from one of the first transport devices (RO) to another one of the first transport devices (RO) via at least one virtual channel.

10. The data transport system of any one of claims 1 to 9, wherein the data transport system is a Network on Chip, in the following also referred to as NoC, system, wherein the first transport devices (RO), the second transport devices (TR; TS), the first paths and the second paths are provided in a single chip.

11. The data transport system of any one of claims 1 to 9, wherein the second transport devices (TR; TS) are provided in different chips.

12. The data transport system of claim 11, wherein the data transport system is a super computer system and the chips are provided in at least two computers.
